(19) **Europäisches Patentamt**
**European Patent Office**
**Office européen des brevets**

(11) **EP 4 775 851 A1**

(12) **EUROPEAN PATENT APPLICATION**

(43) Date of publication:
**15.07.2026 Bulletin 2026/29**

(51) International Patent Classification (IPC):
***F16H 49/00*** *(2006.01)*

(21) Application number: **25151716.5**

(22) Date of filing: **14.01.2025**

(52) Cooperative Patent Classification (CPC):
**F16H 49/001**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Università di Pisa**
**56126 Pisa (IT)**

(72) Inventors:
- **MUTTATHIL GOPANUNNI, Ramesh Krishnan**
  **56122 Pisa (IT)**
- **MARTIGNETTI, Lorenzo**
  **56122 Pisa (IT)**
- **ANGELINI, Franco**
  **56122 Pisa (IT)**
- **GARABINI, Manolo**
  **56122 Pisa (IT)**

(74) Representative: **Mola, Edoardo et al**
**Praxi Intellectual Property S.p.A.**
**Via XX Settembre 8**
**16121 Genova (IT)**

(54) **HARMONIC SPEED REDUCER**

(57) A harmonic speed reducer (1) comprises a casing (2), an internal support (9) housed within the casing (2) and rotatably driven around a rotation axis (10), idle pulleys (11) connected to rotate at opposite ends of the internal support (2), toothed belt elements (13) tensioned by the idle pulleys (11), an output pulley (14) housed in the internal support (9) and coaxial with the rotation axis (10), wherein the output pulley (14) is rotatable relative to the internal support (9) and the casing (2), a fixed pulley (15) secured within the casing (2) and coaxial with the output pulley (14), with both engaged by the toothed belt elements (13), wherein the output pulley (14) includes a shaft (16) coaxial with the rotation axis (10) and extending through the fixed pulley (15), and wherein the output pulley (14) has a number $N_1$ of teeth different from a number $N_2$ of teeth of the fixed pulley (15), such that, upon rotating the internal support (9) at a speed Vi, the output pulley (14) rotates at a different speed $V_2$ from speed Vi.

**FIG.1**

EP 4 775 851 A1

**Description**

TECHNOLOGICAL FIELD

The present invention relates to a harmonic speed reducer, specifically a reducer designed for applications wherein precise rotational speed reduction.

In particular, the harmonic speed reducer according to the present invention is configured to achieve a wide range of reduction ratio.

Furthermore, this harmonic speed reducer is intended for a wide range of applications, including industrial and robotic uses, where compactness, precision, and reliability are of primary importance.

PRIOR ART

The use of a harmonic speed reducer to decrease the rotational speed of motors while providing high positional accuracy has been known for some time.

In general, a harmonic speed reducer is a mechanical device used to deliver an output rotation from the reducer that is slower than the input rotation supplied to the reducer.

According to a known embodiment, a traditional harmonic speed reducer comprises a wave generator, a flexspline, and a rigid ring (also referred to as a rigid spline).

The wave generator is an elliptical component mounted on a rotating shaft, whose primary function is to deform the flexspline, a flexible, toothed element of the system.

The deformation occurs due to the elliptical shape of the generator, which forces the flexspline to cyclically engage with the rigid ring.

The flexspline, in turn, is a thin ring which is made with a rigid material which is deformed during use. The manufacturing cost for its production are quite high and lifetime is quite short.

The flexspline has external teeth that deforms in a controlled manner, following the movement of the wave generator. As a result of this deformation, the teeth of the flexspline partially engage with the internal teeth of the rigid ring, which remains fixed during the operation of the harmonic reducer.

In practice, the difference in the number of teeth between the flexspline and the rigid ring, which in general is equal to two, causes two contact points and the flexspline to rotate slightly relative to the rigid ring with each complete rotation of the wave generator, thereby achieving a significant reduction in the output rotational speed of the harmonic reducer.

Such a harmonic reducer is highly efficient in providing a high reduction ratio.

U.S. Patent 2,906,143 describes an example of a transmission system in which relative motion occurs between a circular internal gear and a flexible external gear.

This system offers numerous advantages, including the ability to achieve high reduction ratios in a single stage with minimal backlash, making it ideal for robotic applications where high reduction ratios and compactness are required.

Another example of a speed reduction mechanism that exploits the difference in the number of gear teeth to achieve higher reduction ratios is disclosed in the document EP0444790A2, which teaches a hypocycloidal gear mechanism. In this system, high reduction ratios are obtained through the meshing of an internal and external gear with a small difference in the number of teeth between the two.

The solution described in US 2,906,143 presents the drawback of high manufacturing costs due to the complex processes required to produce the flexible external gear.

Furthermore, since the reduction ratio directly depends on the difference in the number of teeth between the gears, one of which is internal, the solutions described in US 2,906,143 and EP0444790A2 require the use of highly precise tools to achieve high reduction ratios in relatively small volumes.

Additionally, the solution described in EP0444790A2 requires an eccentric arrangement, which induces vibrations in the system.

There is a need in the field for a harmonic speed reducer with a more compact structure than traditional solutions and lower production costs.

OBJECTS OF THE INVENTION

The primary objective of the invention is to create a harmonic speed reducer with a wide range of attainable speed reduction ratios in single stage.

A further objective of the invention is to reduce the overall footprint, allowing the use of standard, commercially available components to minimize production costs and simplify maintenance.

Another objective of the invention is to ensure the effective and proper operation of a harmonic speed reducer, eliminating backlash in the transmission of motion between internal components, while maintaining high precision in motion transmission.

These and other objectives are achieved by the harmonic speed reducer as defined in claim 1. The dependent claims specify additional advantages of the harmonic speed reducer according to the invention.

The advantages of the harmonic speed reducer according to the invention are evident.

The harmonic speed reducer is characterized by an innovative configuration that allows for high efficiency, with a reduced number of moving parts and a simple yet robust mechanical construction.

The harmonic speed reducer according to the invention comprises a housing that defines at least one opening on one face of the housing, an internal support housed within the housing and rotatable relative to the housing around an axis of rotation, idle pulleys connected rotatably at the ends of the internal support, wherein, upon rotation of the internal support, each idle pulley completes a revolution around the axis of rotation, toothed belt members tensioned by the idle pulleys, an output pulley housed within the internal support, positioned between the idle pulleys and coaxial with the axis of rotation, wherein the output pulley is rotatable relative to the internal support and the housing, a fixed pulley secured within the housing, positioned between the idle pulleys, and at least partially extending into the internal support, wherein the fixed pulley is coaxial with said output pulley and both are engaged by the toothed belt members, the output pulley comprising a shaft coaxial with the axis of rotation, wherein the shaft extends through the fixed pulley, the internal support, and the housing through said at least one opening, wherein both the output pulley and the fixed pulley are engaged by the toothed belt members, and the output pulley having a number of teeth $N_1$ different from the number of teeth $N_2$ on the fixed pulley, such that upon rotation of the internal support around the axis of rotation at a speed $V_2$, the output pulley is rotated at a speed Vi different from speed $V_2$.

DRAWINGS DISCLOSURE

The present invention will now be described, by way of illustration and not limitation, according to its preferred embodiments, with particular reference to the Figures in the accompanying drawings, wherein:

Figure 1 shows a perspective exploded view of a harmonic speed reducer according to the invention;
Figure 2 shows a lateral sectional view of some components of a harmonic speed reducer according to the invention;
Figure 3 shows an operational diagram of some components of the harmonic speed reducer according to the invention;
Figure 4 shows a simplified diagram of some dimensional relationships between components of the harmonic speed reducer according to the invention;
Figure 5 shows a perspective view of a further embodiment of the harmonic speed reducer according to the invention, wherein some components have been omitted;
Figure 6 is a sectional view of the harmonic speed reducer according to Figure 5;
Figure 7 shows a perspective view of a further embodiment of the harmonic speed reducer according to the invention, wherein some components have been omitted;
Figure 8 is a sectional view of the harmonic speed reducer according to Figure 7;
Figure 9 shows a lateral sectional perspective view of a further embodiment of a harmonic speed reducer according to the invention;
Figure 10 shows a cross-sectional perspective view of the embodiment of the harmonic speed reducer shown in Figure 9;
Figure 11 shows a perspective view, partially exploded, of a further embodiment of a harmonic speed reducer according to the invention;
Figure 12 is a sectional view of the harmonic speed reducer according to Figure 11.

DISCLOSURE OF THE INVENTION

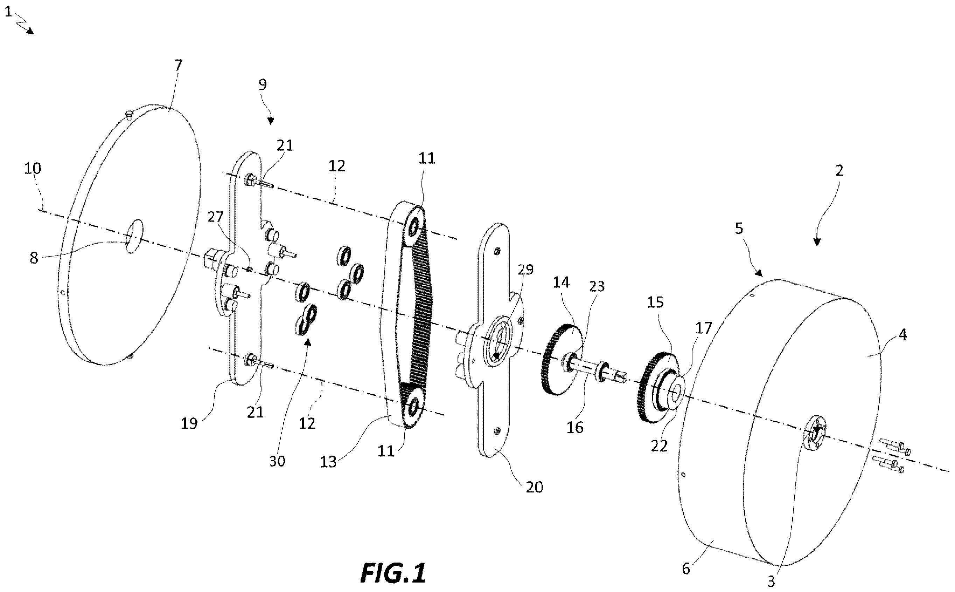

With reference to Figures 1-3 attached, the harmonic speed reducer illustrated therein is generally indicated by reference number 1.

The harmonic speed reducer 1 comprises a housing 2 that defines at least one opening 3 on one face 4 of the housing 2 itself.

The housing 2 includes a body 5, which in turn includes face 4, from which a lateral wall 6 extends, and a cover 7 that is removably connected to the lateral wall 6.

The cover 7 defines a corresponding opening 8, coaxial with opening 3.

The housing 2, configured as described, acts as a protective casing for the components inside the housing 2, which will be described later.

The housing 2 has a substantially cylindrical shape, where the height of the cylinder is less than its external diameter.

In the embodiment shown in Figures 1-3, provided as an example but not limiting, the height of the housing 2 is half or less than half of the diameter of the housing 2. It is understood that alternative embodiments are possible in which the housing 2 has a different shape and a different ratio between its dimensions than those described above. By way of example, according to an alternative embodiment, the housing has a height greater than of the diameter.

The harmonic speed reducer 1 comprises an internal support 9 housed within the housing 2 and selectively rotatable relative to the housing 2 around an axis of rotation 10.

The harmonic speed reducer 1 further comprises idle pulleys 11 rotatably connected to opposite ends of the internal support 9.

Each idle pulley 11 can rotate around a respective axis 12.

In particular, each respective axis 12 is parallel to the axis of rotation 10.

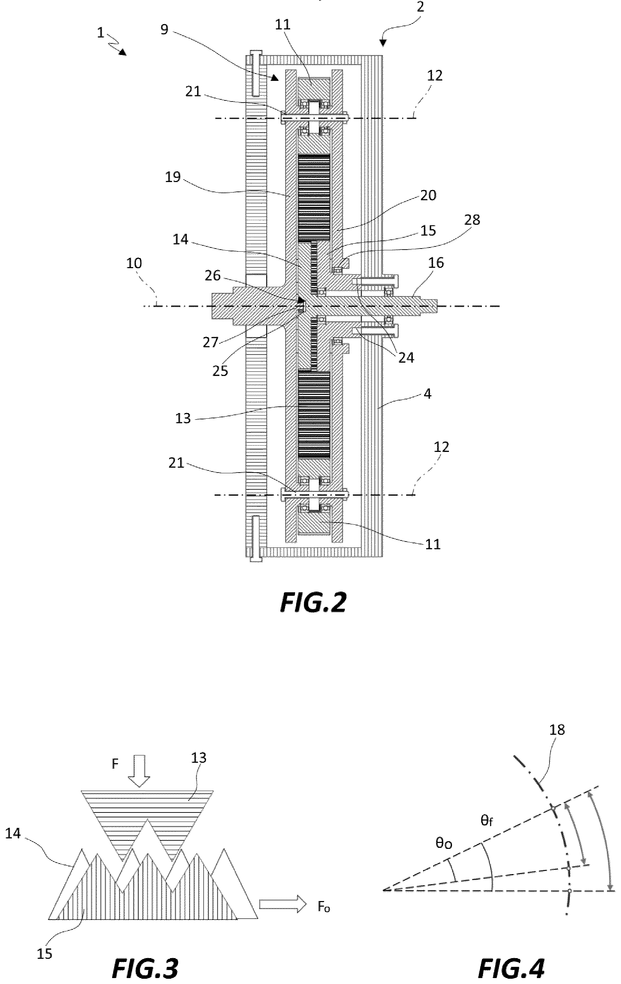

With reference to the embodiment shown in Figures 1 and 2, the harmonic speed reducer 1 comprises two idle pulleys 11, positioned opposite to each other with respect to the axis of rotation 10.

Is it evidenced that according to alternative embodiments, the harmonic speed reducer 1 comprises three idle pulleys 11, as disclosed in the following.

During the operation of the harmonic speed reducer 1, as the internal support 9 rotates, each of the idle pulleys 11 is driven to revolve around the axis of rotation 10.

The harmonic speed reducer 1 comprises toothed belt members 13, tensioned by the idle pulleys 11. In other words, the toothed belt members 13 engage with the teeth of each of the idle pulleys 11, which are positioned to maintain the tension of the toothed belt members 13 themselves.

The harmonic speed reducer 1 comprises an output pulley 14 housed within the internal support 9, positioned between the idle pulleys 11.

The output pulley 14 is coaxial with the axis of rotation 10 and rotatable relative to the internal support 9 and the housing 2.

Furthermore, the harmonic speed reducer 1 comprises a fixed pulley 15 housed inside the internal support 9, near the output pulley 14. Specifically, the output pulley 14 faces the fixed pulley 15.

The fixed pulley 15 is positioned between the idle pulleys 11 and is coaxial with the output pulley 14.

In particular, the fixed pulley 15 is secured within the housing 2 and remains stationary relative to the output pulley 14 during operation.

It should be noted that both the output pulley 14 and the fixed pulley 15 are engaged with the toothed belt members 13.

It is evidenced that number of the idle pulleys 11 and their relative positioning with respect to the central axis 10 allows to vary the number of contact points between the output pulley 14, the fixed pulley 15 and the toothed belt members 13 as disclosed in the following.

More specifically, the output pulley 14 includes a toothed portion and a shaft 16 that extends from this toothed portion and is coaxial with the axis of rotation 10.

Similarly, the fixed pulley 15 has a toothed portion and a tubular portion 17 that extends from the toothed portion and is coaxial with the axis of rotation 10. The tubular portion 17 serves as a connecting portion, allowing the fixed pulley 15 to be removably connected to the housing 2.

The shaft 16 passes through the fixed pulley 15, specifically through the tubular portion 17, the internal support 9, and the housing 2, so as to extend outside the harmonic speed reducer 1 and provide a drive output.

As mentioned, both the output pulley 14 and the fixed pulley 15 have respective toothed portions.

In particular, the output pulley 14 has a number of teeth Ni, which is different from the number of teeth $N_2$ on the fixed pulley 15.

During operation, the internal support 9 is rotated, driving the idle pulleys 11, which in turn cause the toothed belt members 13 to rotate relative to the output pulley 14 and the fixed pulley 15. The fixed pulley 15, being stationary, cannot rotate around the axis of rotation 10.

The difference in the number of teeth between the output pulley 14 and the fixed pulley 15 creates a misalignment between the teeth of the output pulley 14 and those of the fixed pulley 15 (as shown in the schematic of Figure 3).

The toothed belt members 13, engaging both the output pulley 14 and the fixed pulley 15, tend to align the teeth of the movable output pulley 14 with those of the fixed pulley 15. In the schematic shown in Figure 3, the pushing action exerted by the toothed belt members 13, indicated by arrow F, is shown as they wedge between the teeth of the output pulley 14 and the fixed pulley 15, causing movement of the outlet pulley 14 in the direction indicated by arrow Fo.

Specifically, as a result of the rotation of the internal support 9, the idle pulleys 11 can also rotate, causing deformation of the toothed belt members 13 with which they are engaged, thereby causing movement of the output pulley 14.

Figure 4 illustrates a schematic of the contact points between the output pulley 14, the fixed pulley 15, and the teeth of the toothed belt members 13.

The output pulley 14 has an angular pitch $\theta_o$, while the fixed pulley 15 has a respective angular pitch $\theta_f$, with each

angular pitch $\theta_o$, $\theta_f$ understood as the angle determined by the circular pitch.

As the internal support 9 rotates, for every angular pitch, a tooth of the toothed belt members 13 engages both the output pulley 14 and the fixed pulley 15, causing the output pulley 14 to rotate by an angular distance equal to the difference between the respective angular pitch $\theta_f$ and angular pitch $\theta_o$ along a reference circumference 18 of both the output pulley 14 and the fixed pulley 15.

The toothed belt members 13 cause an angular displacement $\theta_{op}$ of the output pulley 14 in the opposite direction to the rotation of the internal support 9, calculated as:

$$\theta_{op} = \theta_O - \theta_f = -360\left(\frac{1}{N_1} - \frac{1}{N_2}\right)$$

In practice, for a complete rotation of the internal support 9 around the axis of rotation 10, the tooth of the toothed belt members 13 engages all $N_2$ teeth of the fixed pulley 15, causing the output pulley 14 to rotate by an angle equal to:

$$\left(\frac{N_1 - N_2}{N_1}\right) * 360°$$

The harmonic speed reducer 1 allows for a single-stage speed reduction ratio calculated as:

$$\frac{N_1 - N_2}{N_1} = \frac{-x}{N_1}$$

Thus, during operation, the harmonic speed reducer 1 enables a speed reduction in the transmission between the internal support 9 and the output pulley 14, depending on the number of teeth $N_1$ on the output pulley 14, the number of teeth Nz on the fixed pulley 15.

Specifically, rotating the internal support 9 around the axis of rotation 10 with an angular speed Vi causes the output pulley 14 and the shaft 16 to rotate with an angular speed $V_2$, different from Vi. According to the number of teeth in the output pulley 14 and that in the fixed pulley 15, the internal support 9 and the output pulley 14 can rotate with the same direction or contrary to each other. In case the number of the teeth in the output pulley 14 is higher than that of the fixed pulley 15, the output direction, i.e the direction of rotation of the outlet pulley 14 will be the same as the input direction, i.e. the direction of rotation of the input support 9. This is also an advantage when compared to the conventional harmonic drives wherein the output direction is always opposite to the input direction.

Depending on the number of teeth on the output pulley 14 and the fixed pulley 15, the reduction ratio can be adjusted through a single-stage reducer, wherein the range of the reduction ratio which can be achieve is wide.

In particular, the harmonic speed reducer according to the invention allow to obtain high reduction ratio as well as low reduction ratios, for example 9:1 or 3:1. Such low reduction ratio are not achievable by conventional harmonic drives due to the characteristics of the flex spline.

In the following table is provided, by way of example, some of the reduction ratio attainable by the harmonic speed reducer according to the invention.

| | t | P11 | P12 | P13 | P14 | P15 | P16 | P17 | P18 | P19 | P20 | P21 | P22 | P23 | P24 | P25 | P26 | P27 | P28 |
|---|---|---|---|---|---|---|---|---|---|---|---|---|---|---|---|---|---|---|---|
| | | | | | | | | | **Fixed pulley with $N_2$ teeth** | | | | | | | | | | |
| Output pulley $N_1 = N_2 + t$ | -3 | * | | -3 | -3.3 | -3.7 | -4 | -4.3 | -4.7 | -5 | -5.3 | -5.7 | -6 | -6.3 | -6.7 | -7 | -7.3 | -7.7 | -8 | -8.3 |
| | -2 | -4.5 | -5 | -5.5 | -6 | -6.5 | -7 | -7.5 | -8 | -8.5 | -9 | -9.5 | -10 | -10.5 | -11 | -11.5 | -12 | -12.5 | -13 |
| | -1 | -10 | -11 | -12 | -13 | -14 | -15 | -16 | -17 | -18 | -19 | -20 | -21 | -22 | -23 | -24 | -25 | -26 | -27 |
| | +1 | 12 | 13 | 14 | 15 | 16 | 17 | 18 | 19 | 20 | 21 | 22 | 23 | 24 | 25 | 26 | 27 | 28 | 29 |
| | +2 | 6.5 | 7 | 7.5 | 8 | 8.5 | 9 | 9.5 | 10 | 10.5 | 11 | 11.5 | 12 | 12.5 | 13 | 13.5 | 14 | 14.5 | 15 |
| | +3 | 4.7 | 5 | 5.3 | 5.7 | 6 | 6.3 | 6.7 | 7 | 7.3 | 7.7 | 8 | 8.3 | 8.7 | 9 | 9.3 | 9.7 | 10 | * |

The internal support 9 comprises a first support element 19 and a second support element 20, which are parallel and spaced apart, and are connected by connecting pins 21. These connecting pins not only act as spacers for the first support 19 and second support 20 but also serve as pivots for the respective idle pulleys 11.

According to the embodiment shown in Figures 1 and 2, the harmonic speed reducer 1 comprises two connecting pins 21 provided opposite to each other with respect to the central axis 10. Each connecting pin 21 supports a respective idle pulley 11.

In one embodiment, the first support element 19 and the second support element 20 each have a plate-like configuration.

In particular, referring to the embodiment shown in the exploded view of Figure 1, the first support element 19 and the second support element 20 have an elongated shape, with the connecting pins 21 positioned at opposite ends of the internal support 9.

According to alternative embodiments of the harmonic speed reducer, the first support 19 and the second support 20 have a shape different than the elongated one shown in Figure 1, as better disclose in the following.

The tubular portion 17 of the fixed pulley 15 defines a central opening 22 that passes through the fixed pulley 15 itself.

The central opening 22 is engaged by the shaft 16 of the output pulley 14. To this end, the central opening 22 is sized to accommodate rolling elements 23 that support the rotatable shaft 16 inside the fixed pulley 15.

In particular, the rolling elements 23 are positioned between the shaft 16 and the tubular portion 17 of the fixed pulley 15 (see Figure 2).

The tubular portion 17 has a connection end designed to be connected to a face of the housing 2, allowing the fixed pulley 15 to be secured to the housing 2.

The tubular portion 17, at the connection end, delimits threaded seats 24 for a removable connection between the fixed pulley 15 and the face 4 of the housing 2 using screws or similar fasteners, as shown, for example, in Figure 2.

The threaded seats 24 are accessible at the connecting end of the tubular portion 17 to be engaged, in a removably manner, by respective fasteners.

The output pulley 14 is rotatably connected to the internal support 9 via a central bearing 25. More specifically, the output pulley 14 has a central housing 26 designed to accommodate the central bearing 25, which is in turn engaged internally by a support pin 27 that cantilevers from the first support element 19 (see, for example, Figure 2). The central housing 26 is coaxial with the axis of rotation 10.

The internal support 9 is rotatably connected to the fixed pulley 15 via an internal bearing 28. More specifically, the internal bearing 28 is engaged internally by the tubular portion 17 of the fixed pulley 15 and, in turn, engages a hole 29 passing through the second support element 20. The hole 29 is centred and thus coaxial with the axis of rotation 10.

The rolling elements that provide rotatable support between the output pulley 14, the fixed pulley 15, the internal support 9, and the housing 2 ensure stable attachment and substantially vibration-free rotation between the internal support 9 and the housing 2, particularly between the output pulley 14 and the housing 2.

The harmonic speed reducer 1 includes tensioning components housed within the housing 2, designed to maintain tension in the toothed belt members 13 to ensure proper engagement between them, the output pulley 14, and the fixed pulley 15. These tensioning components are located near the central portion of the harmonic speed reducer 1, close to the axis of rotation 10. More specifically, the tensioning components are positioned near the output pulley 14 and the fixed pulley 15.

In the embodiment shown in Figures 1, the tensioning components include bearings 30, rotating pins, or similar elements that are rotatably connected to the internal support 9. For example, at least one of the first support element 19 and the second support element 20 has cantilevered supports engaged by the respective bearings 30. The bearings 30 rest externally against the toothed belt members 13, i.e., on the opposite side of the engagement with the output pulley 14 and the fixed pulley 15.

In the embodiment shown in Figure 1, the supports are fixed. However, an alternative embodiment, not illustrated in the accompanying Figures, includes adjustable supports that allow the bearings 30 to be moved closer to or farther from the toothed belt members 13 depending on specific usage requirements. In other words, in this alternative embodiment, the position of the bearings 30 can be adjusted along a transverse or perpendicular direction relative to the axis of rotation 10, to be moved forward to or away from with respect to the axis of rotation 10.

The tensioning components ensure proper engagement between the toothed belt members 13, the output pulley 14, and the fixed pulley 15, preventing undesired slipping that could compromise the synchronization between the rotation of the internal housing 9 and the shaft 16 of the output pulley 14.

It is evidenced that the number of the idle pulleys 11 and their positioning relative to the rotation axis 10 as well as the number of the bearings 30 and their relative positioning with regard to both the rotation axis 10 and the idle pulleys 11 defines the number of contact points between the output pulley 14, the fixed pulley 15 and the toothed belt members 13. In this invention, the idle pulleys 11 provide tension in the toothed belt members 13, ensuring the proper and efficient movement of the output pulley 14 relative to the fixed pulley 15. During operation, the fixed pulley 15 locks any movement of the toothed belt members 13, allowing effective motion without play or vibration.

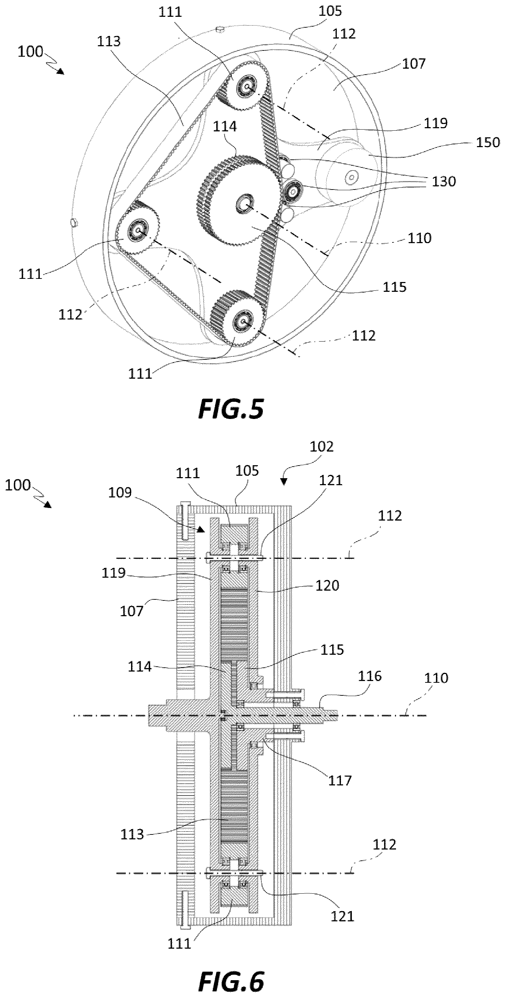

Figures 5 and 6 show an alternative embodiment of a harmonic speed reducer according to the invention, wholly indicated by reference number 100.

In the following description, corresponding components to those previously disclosed will use the same reference numbers, increased by one hundred units.

The harmonic speed reducer 100 differs from the previous embodiment in the configuration of the internal support, in the number and arrangement of the idle pulleys and of the bearings and in the number of engaging points between the belt, the outlet pulley and the fixed pulley. According to the harmonic speed reducer 100 respectively engages the output pulley and the fixed pulley in one point.

The harmonic speed reducer 100 includes a housing 102, which in turn comprises a body 105 and a cover 107 removably connected to the body 105.

The configuration of the housing 102 is the same of that already disclosed in the previous embodiment, to which reference is made.

Similarly to the previous embodiment, the harmonic speed reducer 100 comprises an internal support 109 which, in turn, comprises a first support element 119 and a second support element 120 connected to each other by connecting pins 121 (see Figure 6). The internal support 109 can be selectively rotated around a rotation axis 110.

The internal support 109 has a cross configuration, as better disclosed in the following.

The harmonic speed reducer 100 comprises three idle pulleys 111, which are rotatably connected to the internal support 109. These idle pulleys 111 can rotate around respective axes 112, defined by the pins 121, which are parallel to the rotation axis 110. Specifically, the idle pulleys 111 are mounted along the pins 121.

The harmonic speed reducer 100 also includes an output pulley 114 housed within the internal support 109, positioned between the idle pulleys 111. The output pulley 114 is coaxial with the rotation axis 110 and rotates relative to the internal support 109 and the housing 102.

Additionally, the harmonic speed reducer 100 includes a fixed pulley 115 housed within the internal support 109, near the output pulley 114. Specifically, the output pulley 114 is located in front of the fixed pulley 115. The fixed pulley 115 is positioned between the idle pulleys 111 and is coaxial with the output pulley 114. The fixed pulley 115 is secured inside the housing 102 and remains stationary relative to the output pulley 114 during operation. In particular, the fixed pulley 115 is connected to the body 105 according to the same manner disclosed with regard to the previous embodiment, to which reference is made.

Both the output pulley 114 and the fixed pulley 115 engage with the toothed belt members 113. More specifically, the output pulley 114 includes a toothed portion and a shaft 116 that extends from this toothed portion and is coaxial with the rotation axis 110. The fixed pulley 115 has a tubular configuration, with a toothed portion engaged with the toothed belt members 113 and a tubular portion 117 that extends from the toothed portion, also coaxial with the rotation axis 110. The tubular portion 117 serves as a connecting element for the removable connection of the fixed pulley 115 to the housing 102, according to the same manner disclosed for the previous embodiment, to which reference is made.

The shaft 116 passes through the fixed pulley 115, particularly through the tubular portion 117, the internal support 109, and the housing 102.

The shaft 116 is rotatably support in the tubular portion 117 via bearings.

As mentioned, both the output pulley 114 and the fixed pulley 115 have respective toothed portions, each with a different number of teeth, serving the same purposes as described for the previous embodiment, to which reference is made to avoid overcomplicating this description.

As above disclosed, the internal support 109 has a cross configuration, with four arms radially extending from the rotation axis 110. The four arms are perpendicular to each other.

Three among the four arms are provided with a respective idle pulley 111 (see for example Figure 5). More in detail, each idle pulley 111 is provided at an end of the respective arm to which it is rotatably connected.

The arm which is not provided with the idle pulley 111 is provided with a counterweight 150 to balance the support 109 and avoid any vibration during the rotation of the support 109 around the rotation axis 110.

The toothed belt members 113 engage the three idle pulleys 111 and both the output pulley 114 and the fixed pulley 115. In other words, the toothed belt members 113 is wounded around the three idle pulleys 111, the output pulley 114 and the fixed pulley 115 assuming an asymmetrical configuration with respect to the symmetrical configuration of the internal support 109.

With reference to Figure 5, the toothed belt members 113 are configured substantially as a triangle.

According to the previous embodiment, the harmonic speed reducer 100 comprises tensioning components provided inside the housing 102 and configured to maintain tension in the toothed belt members 113 to ensure proper engagement between them, the output pulley 114, and the fixed pulley 115.

The tensioning components are positioned near the output pulley 114 and the fixed pulley 115.

The tensioning components include bearings 130, rotating pins, or similar elements that are rotatably connected to the internal support 109 (see Figure 5).

The bearings 130 are provided externally against the toothed belt members 113, i.e., on the opposite side of the engagement with the output pulley 114 and the fixed pulley 115.

In particular, the bearings 130 are provided along an arm of the internal support 109 which is not provided with any idle pulley 111. More in detail, with reference to Figure 5, the bearings 130 are interposed between the toothed belt members 113 and the counterweight 150.

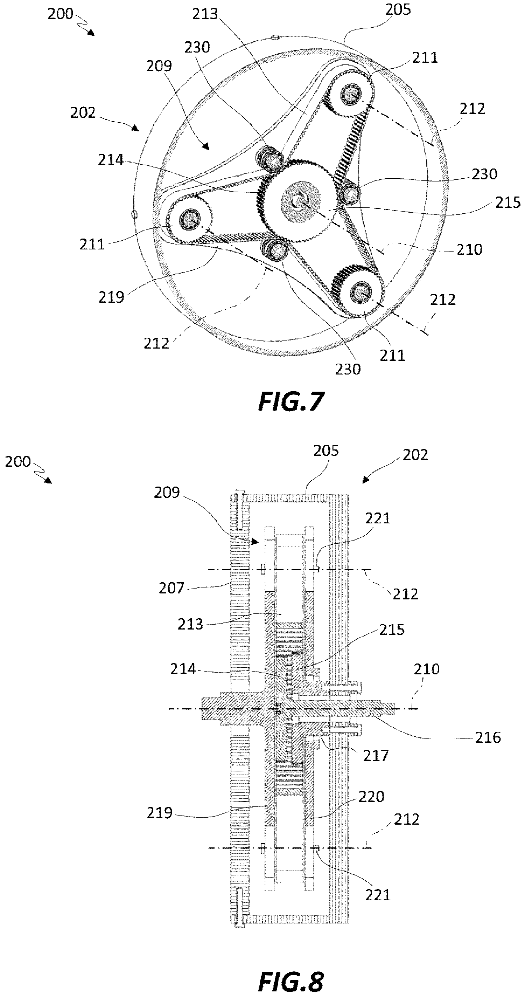

Figures 7 and 8 show an alternative embodiment of a harmonic speed reducer according to the invention, wholly indicated by reference number 200.

In the following description, corresponding components to those previously disclosed will use the same reference numbers, increased by one hundred units and by two hundred unit with regard to the harmonic speed reducer 1.

The harmonic speed reducer 200 differs from the previous embodiment in the configuration of the internal support and in the arrangement of the idle pulleys and the bearings.

The harmonic speed reducer 200 includes a housing 202, which in turn comprises a body 205 and a cover 207 removably connected to the body.

The configuration of the housing 202 is the same of that already disclosed in the previous embodiment, to which reference is made.

Similarly to the previous embodiment, the harmonic speed reducer 200 comprises an internal support 209, which comprises a first support element 219 and a second support element 220 connected to each other by connecting pins 221 (see Figure 7). The internal support 209 can be selectively rotated around a rotation axis 210.

The harmonic speed reducer 200 comprises three idle pulleys 211, which are rotatably connected to the internal support 209. These idle pulleys 211 can rotate around respective axes 212, defined by the pins 221, which are parallel to the rotation axis 210. Specifically, the idle pulleys 211 are mounted along the pins 221.

The harmonic speed reducer 200 also includes an output pulley 214 housed within the internal support 209, positioned between the idle pulleys 211. The output pulley 214 is coaxial with the rotation axis 210 and rotates relative to the internal support 209 and the housing 202.

Additionally, the harmonic speed reducer 200 includes a fixed pulley 215 housed within the internal support 209, near the output pulley 214. Specifically, the output pulley 214 is located in front of the fixed pulley 215. The fixed pulley 215 is positioned between the idle pulleys 211 and is coaxial with the output pulley 214. The fixed pulley 215 is secured inside the housing 202 and remains stationary relative to the output pulley 214 during operation. In particular, the fixed pulley is connected to the body 205.

Both the output pulley 214 and the fixed pulley 215 engage with the toothed belt members 213. More specifically, the output pulley 214 includes a toothed portion and a shaft 216 that extends from this toothed portion and is coaxial with the rotation axis 210. The fixed pulley 215 has a tubular configuration, with a toothed portion engaged with the toothed belt members 213 and a tubular portion 217 that extends from the toothed portion, also coaxial with the rotation axis 210. The tubular portion 217 serves as a connecting element for the removable connection of the fixed pulley 215 to the housing 202, according to the same manner disclosed for the previous embodiment, to which reference is made.

The shaft 216 passes through the fixed pulley 215, particularly through the tubular portion 217, the internal support 209, and the housing 202.

As mentioned, both the output pulley 214 and the fixed pulley 215 have respective toothed portions, each with a different number of teeth, serving the same purposes as described for the previous embodiment, to which reference is made to avoid overcomplicating this description.

The internal support 209 has a triangular configuration or substantially triangular configuration, comprising three arms radially extending from the rotation axis 210.

In particular, the three arms are equidistant to each other.

Each of the three arms carries a respective idle pulley 211. Each idle pulley 211 is rotatably connected at an end of a respective among the three arms. (see Figure 7).

The harmonic speed reducer 200 comprises tensioning components provided inside the housing 202 and configured to maintain tension in the toothed belt members 213 to ensure proper engagement between them, the output pulley 214, and the fixed pulley 215.

The tensioning components are positioned near the output pulley 214 and the fixed pulley 215.

In particular, the tensioning components include three bearings 230, rotating pins, or similar elements that are rotatably connected to the internal support 209.

The bearings 230 are provided at the same radial distance from the rotation axis 210, equidistant to each other. In particular, the three bearings 230 have an angular phase shift with respect to the idle pulleys of about 60° degrees. Each one of the three bearings 230 keeps a respective section of the toothed belt members 213 in contact against the output pulley 214 and the fixed pulley 215.

According to the harmonic speed reducer 200, as shown in Figures 7 and 8, it is possible to use an output pulley 214 and a fixed pulley 215 that differ by three teeth or multiple of three (according to the label provided above, t= 3).

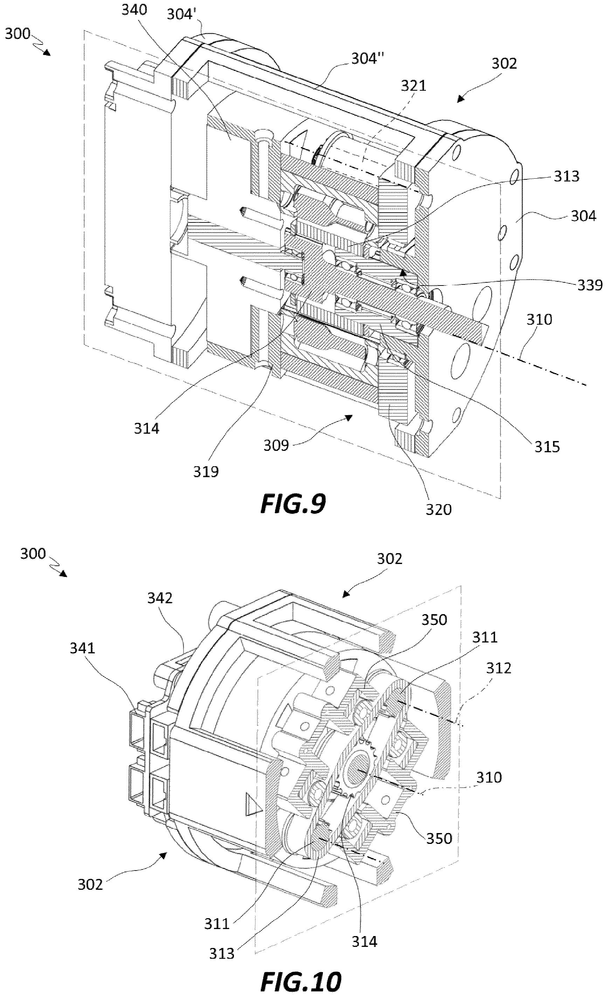

Figures 9 and 10 show an alternative embodiment of a harmonic speed reducer according to the invention, wholly indicated by reference number 300. In the following description, corresponding components to those previously described with reference to the harmonic speed reducer 1 will use the same reference numbers, increased by three hundred units.

The harmonic speed reducer 300 differs from the previous embodiment in the configuration of the internal support and the inclusion of an electric motor inside the housing to rotate the internal support.

The harmonic speed reducer 300 includes a housing 302, which in turn comprises a first face 304 and a second face 304', connected and spaced apart by a circular cage 304". The housing 302 has a basket-like configuration, possibly featuring one or more openings passing through the circular cage 304" (see, for example, Figure 10).

Similarly to the previous embodiment, the harmonic speed reducer 300 includes an internal support 309, which comprises a first support element 319 and a second support element 320 connected by connecting pins 321. The internal support 309 can be selectively rotated around a rotation axis 310.

The harmonic speed reducer 300 features idle pulleys 311, which are rotatably connected to the internal support 309. These idle pulleys 311 can rotate around respective axes 312, which are parallel to the rotation axis 310. Specifically, the idle pulleys 311 are mounted along the pins 321.

The harmonic speed reducer 300 also includes an output pulley 314 housed within the internal support 309, positioned between the idle pulleys 311. The output pulley 314 is coaxial with the rotation axis 310 and rotates relative to the internal support 309 and the housing 302.

Additionally, the harmonic speed reducer 300 includes a fixed pulley 315 housed within the internal support 309, near the output pulley 314. Specifically, the output pulley 314 is located in front of the fixed pulley 315. The fixed pulley 315 is positioned between the idle pulleys 311 and is coaxial with the output pulley 314. The fixed pulley 315 is secured inside the housing 302 and remains stationary relative to the output pulley 314 during operation.

Both the output pulley 314 and the fixed pulley 315 engage with the toothed belt members 313. More specifically, the output pulley 314 includes a toothed portion and a shaft 316 that extends from this toothed portion and is coaxial with the rotation axis 310. The fixed pulley 315 has a tubular configuration, with a toothed portion engaged with the toothed belt members 313 and a tubular portion 317 that extends from the toothed portion, also coaxial with the rotation axis 310. The tubular portion 317 serves as a connecting element for the removable connection of the fixed pulley 315 to the housing 302.

The shaft 316 passes through the fixed pulley 315, particularly through the tubular portion 317, the internal support 309, and the housing 302, similar to the previously described embodiment.

As mentioned, both the output pulley 314 and the fixed pulley 315 have respective toothed portions, each with a different number of teeth, serving the same purposes as described for the previous embodiment, to which reference is made to avoid overcomplicating this description.

The fixed pulley 315 includes a connection portion opposite the toothed portion, designed to securely engage a corresponding connection seat 339 inside the face 304 of the housing 302. The housing seat 339 is coaxial with the rotation axis 310, ensuring the correct alignment of the fixed pulley 315 with the rotation axis 310.

The harmonic speed reducer 300 also incorporates an electric motor 340 housed within the housing 302. The electric motor 340 is operatively connected to the internal support 309 to selectively rotate it around the rotation axis 310. To this end, the harmonic speed reducer 300 features electrical connectors 341 attached to the housing 302 and operatively connected to a control logic unit 342 which, in turn, is operatively connected to the electric motor 340.

The control logic unit 342 powers the electric motor 340 via an external power supply, not shown in the Figures, to which it is connected via the electrical connectors 341. The control logic unit 342 is configured to adjust the operation of the electric motor 340 according to specific usage needs.

The harmonic speed reducer 300 differs from the previous embodiment in the design of the tensioning components for the toothed belt members 313. Specifically, the tensioning components include at least one mobile internal support 350 located inside the internal support 309. This support is designed to hold bearings or pins 330, which rest externally against the toothed belt members, keeping them under tension, as described in the previous embodiment (see Figure 10).

As shown in Figure 10, the harmonic speed reducer 300 includes two mobile internal supports 350, symmetrically positioned relative to the rotation axis 310. The position of the bearings or pins 330 can be adjusted relative to the mobile internal supports 350 and to the rotating axis 310, allowing them to be moved closer to or farther from the toothed belt members 313, depending on specific requirements.

Each of the mobile internal supports 313 holds a pair of bearings or pins 330 to maintain tension on both sides of the output pulley 314 and the fixed pulley 315.

The harmonic speed reducer 300 provides the same advantages as the previously described embodiment.

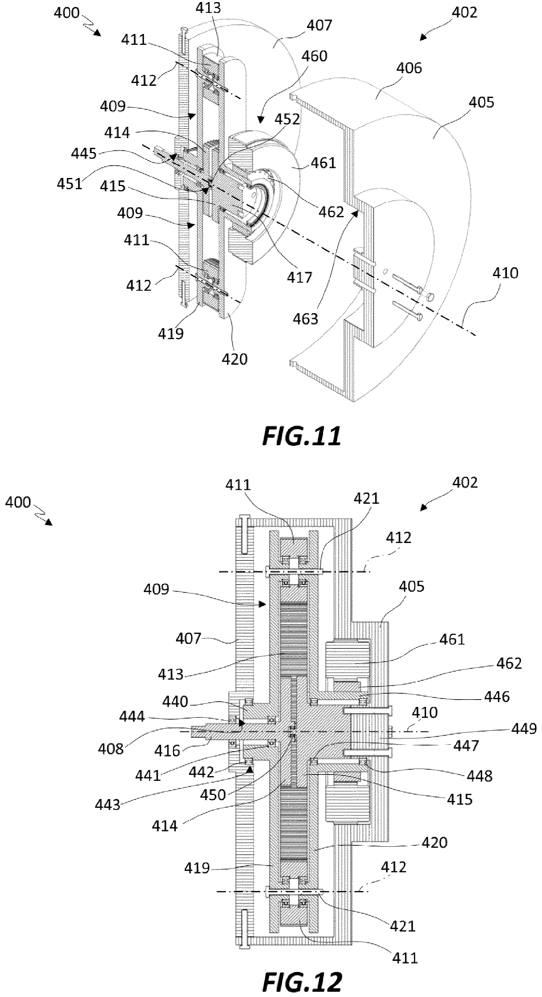

Figures 11 and 12 show a further embodiment of the harmonic speed reducer according to the invention, wholly indicated by 400.

In the following description, components corresponding to those previously disclosed with reference to the harmonic speed reducer 1 will use the same reference numbers, increased by four hundred units.

The harmonic speed reducer 400 differs from the harmonic speed reducer 1 for the presence of an electric motor arranged inside the housing and the configuration and the connection between the outlet pulley and the fixed pulley.

The harmonic speed reducer 400 comprises a housing 402 in turn comprising a body 405, from which a lateral wall 406 extends, and a cover 407 that is removably connected to the lateral wall 406.

The cover 407 defines an opening 408.

The housing 402 acts as a protective casing for the components inside the housing 402 itself.

The housing 402 has a substantially cylindrical shape.

The harmonic speed reducer 400 comprises an internal support 409 housed within the housing 402 and selectively rotatable relative to the housing 402 around an axis of rotation 410.

The rotation axis 410 is coaxial or substantially coaxial to the opening 408 (see Figure 12).

The harmonic speed reducer 400 comprises idle pulleys 411 rotatably connected to opposite ends of the internal support 409.

Each idle pulley 411 can rotate around a respective axis 412.

In particular, each respective axis 412 is parallel to the axis of rotation 410.

With reference to the embodiment shown in Figures 11 and 12, the harmonic speed reducer 400 comprises two idle pulleys 411, positioned opposite to each other with respect to the axis of rotation 410.

Alternative embodiments, not shown in the Figures, are possible, wherein the harmonic speed reducer 400 comprises three idle pulleys 411, provided with an asymmetrical arrangement or equidistant to each other with respect to the axis of rotation 410 according to the embodiments previously disclosed (respectively harmonic speed reducer 100 and harmonic speed reducer 200).

During the operation of the harmonic speed reducer 400, as the internal support 409 is caused to rotate, each of the idle pulleys 411 is driven to revolve around the axis of rotation 410.

The harmonic speed reducer 400 comprises toothed belt members 413, tensioned by the idle pulleys 411. In other words, the toothed belt members 413 engage with the teeth of each of the idle pulleys 411, which are positioned to maintain the tension of the toothed belt members 413 themselves.

The harmonic speed reducer 400 comprises an output pulley 414 housed within the internal support 409, positioned between the idle pulleys 411.

The output pulley 414 is coaxial with the axis of rotation 410 and rotatable relative both to the internal support 409 and the housing 402.

The harmonic speed reducer 400 comprises a fixed pulley 415 housed inside the internal support 409, near the output pulley 414. Specifically, the output pulley 414 and the fixed pulley 415 face to each other.

The fixed pulley 415 is positioned between the idle pulleys 411 and is coaxial with the output pulley 414.

The fixed pulley 415 is secured within the housing 402 and remains stationary relative to the output pulley 414 during operation.

It should be noted that the output pulley 414 and the fixed pulley 415 have respective toothed portion and both are engaged with the toothed belt members 413.

It is evidenced that number of the idle pulleys 411, their relative positioning with respect to the central axis 410 allows to vary the number of contact points between the output pulley 414, the fixed pulley 415 and the toothed belt members 413 as disclosed with regard to the previous embodiments to which reference is made.

Depending on the number of teeth on the output pulley 414 and the fixed pulley 415, the reduction ratio can be adjusted through a single-stage reducer, wherein the range of the reduction ratio which can be achieve is wide.

The output pulley 414 includes a toothed portion and a shaft 416 that extends from this toothed portion and is coaxial with the axis of rotation 410.

Similarly, the fixed pulley 415 has a toothed portion and a respective shaft 417 that extends from the toothed portion and is coaxial with the axis of rotation 410. The respective shaft 417 serves as a connecting portion, allowing the fixed pulley 415 to be removably connected to the housing 402.

The shaft 416 and the respective shaft 417 are coaxial to each other and extend along the rotation axis 410 opposite to each other. In particular, the shaft 416 of the output pulley 414 extends externally from the housing 402, so as to extend outside the harmonic speed reducer 400 and provide a drive output..

The shaft 416 extends outside the housing 402 from a side opposite to the fixed pulley 415.

The internal support 409 comprises a first support element 419 and a second support element 420, which are parallel and spaced apart, and are connected by connecting pins 421. These connecting pins not only act as spacers for the first support 419 and second support 420 but also serve as pivots for the respective idle pulleys 411.

According to the embodiment shown in Figures 11 and 12, the internal support 409 has an elongated shape, comprising two arms aligned to each other and diametrically opposed with respect to the axis of rotation 410. In particular, both the first support 419 and the second support 420 have an elongated shape, each comprising two arms, aligned and diametrically opposed to each other with respect to the axis of rotation 410.

The harmonic speed reducer 400 comprises two connecting pins 421 provided opposite to each other with respect to the central axis 410. Each connecting pin 421 supports a respective idle pulley 411.

In one embodiment, the first support element 419 and the second support element 420 each has a plate-like configuration.

In particular, referring to the embodiment shown in the exploded view of Figure 11, the first support element 419 and the second support element 420 have an elongated shape, comprising two elongates arms, aligned to each other and diametrically opposed with respect to the rotation axis, wherein the connecting pins 421 are positioned at opposite ends of the internal support 409.

The first support 419 and the second support 420 can have a shape different than the elongated one shown in Figure 11. For instance, in alternative embodiments of the harmonic speed reducer 400, not shown in the accompanying Figures, three idle pulleys 411 are included. Additionally, the internal support 409 comprises either four or three arms, shaped as described earlier respectively in connection with the harmonic speed reducer 100 or harmonic speed reducer 200, to which reference is hereby made.

The first support 419 has a sleeve 440 externally protruding from the internal support 409. In other words, the sleeve 440 protrudes towards the cover 407 of the housing 402.

The sleeve 440 is configured as a hollow cylindrical element, delimiting an opening which, in turn, is coaxial to the rotation axis 410.

The sleeve 440 is rotatably engaged by the shaft 416 of the output pulley 414 (see Figure 12).

To this end, the sleeve 440 is rotatably connected to the shaft 416 by a first bearing 441.

In particular, the first bearing 441 is internally engaged by the shaft 416 and is externally fitted into the opening delimited in the sleeve 440.

Since the internal support 409 can rotate with respect to the housing 402, the sleeve 440, in turn, is rotatably connected to and supported by the housing 402 by a second bearing 442. More in detail, the second bearing 442 is internally engaged by the first sleeve 440 and externally is fitted in a seat 443 delimited in the cover 407 of the housing 402 (see Figures 11 and 12).

To provide stability to the shaft 416 during its rotation, a third bearing 444 is provided to rotatably connect the shaft 416 to the housing 402.

The third bearing 444 is internally engaged by the shaft 416 and externally it is fitted in a respective seat 445 delimited in the housing 402. More in detail, the respective seat 445 is delimited in the cover 407 in an opposed position with respect to that of the seat 443. In particular, the seat 443 is provided at an internal portion of the cover 407 whereas the respective seat 445 is provided at an external portion of the cover 407 (see Figure 12).

The fixed pulley 415 is rotatably connected to the internal support 409. In particular, the fixed pulley 415 is rotatably connected to the second support 420.

To this regard, the second support 420 has a respective sleeve 446 externally protruding from the second support 420.

By the expression "externally protruding" it is meant that the respective sleeve is protruding from the second support 420 opposite with respect to the first support 419 (see Figure 12).

The fixed pulley 415 is rotatably connected to the respective sleeve 446 by a fifth bearing 447. In particular, the respective shaft 417 of the fixed pulley 415 internally engages the fifth bearing 447. The fifth bearing 447, in turn, is fitted into the opening delimited in the respective sleeve 446.

The fixed pulley 415, in turn, is connected to the housing 402 via its respective shaft 417. With reference to Figure 12, the end of the respective shaft 417, which is opposite to the output pulley 414, is connected to the housing 402 by screws or similar.

To ensure an improved stability to the internal support 409 during its rotation around the rotation axis 410, the harmonic speed reducer 400 comprises a sixth bearing 448 to rotatably connect the respective sleeve 446 and the housing 402. In particular, the respective sleeve 446 is rotatably connected to a central support 449 internally protruding from the body 405 of the housing 402 (see Figure 12).

The sixth bearing 448 is internally engaged by the central support 449 and it is externally fitted into an end portion of the respective sleeve 446 of the second support 420.

To provide an increased stability during the operation of the harmonic speed reducer 400, the output pulley 414 and the fixed pulley 415 are rotatably connected to each other via a central bearing 450.

With reference to the embodiment of the harmonic speed reducer 400 shown in Figures 11 and 12, the output pulley 414 delimits a central seat 451 wherein the central bearing 450 is fitted and the fixed pulley 415 is provided with a central pin 452 protruding from the fixed pulley 415, towards the output pulley 414, to internally engage the central bearing 450.

It is intended that, according to an alternative embodiment not shown in the Figures, the arrangement of the central seat 451 and of the central pin 452 is inverted, i.e. the central seat 451 is provided in the fixed pulley 415 and the central pin 452 protrudes from the output pulley 414 towards the fixed pulley 415.

The tubular portion 417 has a connection end designed to be connected to a face of the housing 402, allowing the fixed pulley 415 to be secured to the housing 402.

The harmonic speed reducer 400 includes tensioning components housed within the housing 402, designed to maintain tension in the toothed belt members 413 to ensure proper engagement between them, the output pulley 414, and the fixed pulley 415.

The tensioning components are located near the central portion of the harmonic speed reducer 400, close to the axis of rotation 410. More specifically, the tensioning components are positioned near the output pulley 414 and the fixed pulley 415.

The configuration of the tensioning components corresponds to those disclosed for the previous embodiments, to which reference is made. In particular, the number and the relative positioning of tensioning components varies in function of the configuration of the internal support 409, as already disclosed for the previous embodiments.

The harmonic speed reducer 400 comprises an electrical motor 460, provided inside the housing 402.

The electrical motor 460, in turn, comprises a stator 461 connected to the housing 402 and a rotor 462 which is connected to the respective sleeve 446 of the second support 420 of the internal support 409.

By way of an example, the stator 461 is fitted into internal seat 463 delimited in the housing 402, at the body 405. The seat 463 is configured to provide the stator 461 coaxial to the rotation axis 410.

It is pointed out that in the attached Figures 11 and 12 electrical connection elements for the connection of the electric motor 460 have been omitted, as well as the presence of a control unit, to simplify the schematic views provided in such Figures.

It is intended that, by way of example, the housing 402 can be provide with openings to allow the passage of cable for the connection of the electrical motor 460 to a power source and a control unit, operatively connected to the electrical motor 460 to control its operation, can be provided externally to the housing 402.

The harmonic speed reducer 400 is able to reach the same advantages with respect to the prior art as disclosed with reference to the previous embodiments.

With reference to the above, it is evident that the harmonic speed reducer 1, 100, 200, 300, 400 enables to obtain a wide range of reduction ratios in a single-stage solution with a simple and compact structure.

Notably, the harmonic speed reducer 1, 100, 200, 300, 400 can be manufactured using standard mechanical components available on the market, particularly the idle pulleys 11, 111, 211, 311, 411 the output pulley 14, 114, 214, 314, 414 and the fixed pulley 15, 115, 215, 315, 415. This results in a cost-optimized solution compared to traditional designs.

Compared to traditional solutions, the harmonic speed reducer 1, 100, 200, 300, 400 enables the achievement of a wide range of reduction ratios while maintaining a compact size. Furthermore, the presence of tensioning components ensures that there is no play between the rotation of the internal support 9, 109, 209, 309, 409 and the output pulley 14, 114, 214, 314, 414 allowing the harmonic speed reducer 1, 100, 200, 300, 400 to be utilized in applications that require high precision in movement.

It is evidenced that the harmonic speed reducer 1, 100, 200, 300, 400 is very flexible in its design and it can be produced with different configuration, for example with reference to the reduction ratio that can be obtained or to the presence of an electrical motor inside the housing 302, 402, to satisfy a wide range of needing according to a solution easy and practical to be used and installed.

The various embodiments of the invention have been described and some modifications and variations have been suggested. However, it is understood that those skilled in the art may make alterations and changes without departing from the scope of protection as defined by the appended claims.

**Claims**

1. A harmonic speed reducer (1;100;200;300;400) comprising:

   a housing (2;102;202;302;402),
   an internal support (9;109;209;309;09) housed within said housing (2;102;202;302;402) and rotatably driven relative to said housing (2;102;202;302;402) around a rotation axis (10;110;210;310;410);
   idle pulleys (11;111;211;311;411) rotatably connected to the ends of said internal support (9;109;209;309;409), wherein, following a rotation of said internal support (9;109;209;309;409), each of said idle pulleys (11;111;211;311;411) makes a revolution around said rotation axis (10;110;210;310;410);
   toothed belt members (13;113;213;313;413) engaged, under tension, by said idle pulleys (11;111;211;311;411), an output pulley (14;114;214;314;414) housed in said internal support (9;109;209;309;409) in a position between said idle pulleys (11;111;211;311;411) and coaxial with said rotation axis (10;110;210;310;410), wherein said output pulley (14;114;214;314;414) is rotatable relative to said internal support (9;109;209;309;409) and said housing (2;102;202;302;402), a fixed pulley (15;115;215;315;415) secured within said housing (2;102;202;302;402), positioned between said idle pulleys (11;111;211;311;411) and extending at least partially into said internal support (9;109;209;309;409), wherein said fixed pulley (15;115;215;315;415) is coaxial with said output pulley (14;114;214;314;414) and both engage with said toothed belt members (13;113;213;313;413), said output pulley (14;114;214;314;414) comprising a shaft (16;116;216;316;416) coaxial with said rotation axis (10;110;210;310;410), wherein said shaft (16;116;216;316) extends through said fixed pulley (15;115;215;315), said internal support (9;109;209;309) and said housing (2;102;202;302) or wherein said shaft (416) extends through said internal support (409) and said housing (402), wherein said output pulley (14;114;214;314;414) and said fixed pulley (15;115;215;315;415) are both engaged by said toothed belt members (13;113;213;313;413), said output pulley (14;114;214;314;414) having a number $N_1$ of teeth different from a number $N_2$ of teeth of said fixed pulley (15;115;215;315;415) so that, following rotation of said internal support (9;109;209;309;409) around said rotation axis (10;110;210;310;410) at a speed $V_1$, said output pulley (14;114;214;314;414) and said shaft (16;116;216;316;416) are driven at a speed $V_2$ different from said speed Vi.

**EP 4 775 851 A1**

2. Harmonic speed reducer (1;100;200;300) according to claim 1, wherein said fixed pulley (15;115;215;315) defines a central opening (22;122;222;322) extending through said fixed pulley (15;115;215;315) and engaged by said shaft (16;116;216;316).

3. Harmonic speed reducer (1;100;200;300) according to claim 2, further comprising rolling elements (23) for rotatably supporting said shaft (16;116) within said opening (22;122).

4. Harmonic speed reducer (1;100;200;300) according to claim 1, wherein said fixed pulley (15;115;215;315) comprises a tubular portion (17;117;217;317) engaged by said output shaft (16;116;216;316), with an end portion of said tubular portion (17;117;217;317) secured by a removable connection to said at least one face (4;104) of said housing (2;102;202;302).

5. Harmonic speed reducer (1;100;200;300;400) according to claim 1, wherein said internal support (9;109;209;309;409) comprises a first support element (19;119;219;319;419) and a second support element (20;120;220;320;420) which are parallel and spaced apart to each other, wherein said first support element (19;119;219;319;419) and said second support element (20;120;220;320;420) are interconnected by connecting pins (21;121;221;321;421), each of which serves as a support pin for a respective one of said idle pulleys (11;111;211;311;411).

6. Harmonic speed reducer (300) according to claim 1, wherein said fixed pulley (315) has a toothed portion engaged with said toothed belt elements (313) and an opposing connecting portion, wherein said connecting portion is configured to engage a respective connection seat (339) defined in said face (304) of said casing (302) coaxial with said rotation axis (310).

7. Harmonic speed reducer (1;100;200;300;400) according to any of the preceding claims, further comprising tensioning elements housed within said casing (2;102;202;302;402) and configured to engage and maintain said toothed belt elements (13;113;213;313;413) in tension in the vicinity of said output pulley (14;114;214;314;414) and said fixed pulley (15;115;215;315;415), wherein said tensioning elements include rolling elements (30;130) that engage said toothed belt elements (13;113;213;313;413) from a side opposite to that engaged by said output pulley (14;114;214;314;414) and said fixed pulley (15;115;215;315;415).

8. Harmonic speed reducer (300) according to the preceding claim, wherein said tensioning elements include at least one movable internal support (350) that can be adjusted towards or away from said toothed belt elements (313) along a direction transverse to or perpendicular to said rotation axis (310).

9. Harmonic speed reducer (300;400) according to any of the preceding claims, comprising an electric motor (340;460) housed within said housing (302;402) and operatively connected to said internal support (309;409) to drive it in rotation around said rotation axis (310;410).

10. Harmonic speed reducer (300) according to claim 9, comprising electrical connectors (341) externally connected to said casing (302) for supplying electrical power to said electric motor (340) and at least one control logic unit (342) operatively connected to said electric motor (340) for controlling its operation.

11. Harmonic speed reducer (400) according to claim 1, wherein said output pulley (414) comprises a shaft (416) extending outside from said housing (402) opposite with respect to said fixed pulley (415).

12. Harmonic speed reducer (400) according to claim 5, wherein said first support (419) comprises a first sleeve (440) which is rotatably engaged by said shaft (416) and said second support (420) comprises a respective sleeve (446) which is rotatably engaged by said respective shaft (417) of said fixed pulley (415).

13. Harmonic speed reducer (400) according to claim 12, wherein said first support (419) is rotatably connected via said first sleeve (440) to said housing (402) and said second support (420) is rotatably connected to said housing (402) via said respective sleeve (446).

14. Harmonic speed reducer (400) according to claim 9 and 12, wherein said electric motor (460) comprises a stator (461) connected to said housing (402) and a rotor (462) connected to said internal support (409).

13

**FIG.1**

**FIG.2**

**FIG.3**

**FIG.4**

**FIG.5**

**FIG.6**

**FIG.7**

**FIG.8**

FIG.9

FIG.10

**FIG.11**

**FIG.12**

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2019 101376 A1 (SCHAEFFLER TECHNOLOGIES AG [DE]) 23 July 2020 (2020-07-23) * paragraph [0027] - paragraph [0030]; figures 1-6 * | 1-14 | INV. F16H49/00 |
| A | DE 103 09 738 B4 (AVRUCKIJ EFIM [DE]) 16 February 2006 (2006-02-16) * the whole document * | 1-14 | |
| A | DE 10 2006 023539 A1 (AVRUCKIJ EFIM [DE]) 22 November 2007 (2007-11-22) * the whole document * | 1-14 | |
| A | DE 10 2006 026444 A1 (AVRUCKIJ EFIM [DE]) 13 December 2007 (2007-12-13) * the whole document * | 1-14 | |
| A | CN 107 893 840 A (CUI PENG) 10 April 2018 (2018-04-10) * figures 1-6 * | 1-14 | TECHNICAL FIELDS SEARCHED (IPC) |
| A | US 9 109 662 B2 (KOBAYASHI MASARU [JP]; HARMONIC DRIVE SYSTEMS [JP]) 18 August 2015 (2015-08-18) * figures 1-3 * | 1-14 | F16H |

The present search report has been drawn up for all claims

| Place of search | Date of completion of the search | Examiner |
|---|---|---|
| Munich | 30 May 2025 | Szodfridt, Tamas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 15 1716

This annex lists the patent family members relating to the patent documents cited in  the above-mentioned European search report.
The members are as contained in the European Patent Office EDP file on
The European Patent Office is in no way liable for these particulars which are merely given for the purpose of information.

30-05-2025

| Patent document cited in search report | Publication date | Patent family member(s) | Publication date |
|---|---|---|---|
| DE 102019101376 A1 | 23-07-2020 | NONE | |
| DE 10309738 B4 | 16-02-2006 | NONE | |
| DE 102006023539 A1 | 22-11-2007 | NONE | |
| DE 102006026444 A1 | 13-12-2007 | NONE | |
| CN 107893840 A | 10-04-2018 | NONE | |
| US 9109662 B2 | 18-08-2015 | CN 103582768 A | 12-02-2014 |
| | | DE 112012006408 T5 | 12-03-2015 |
| | | JP 5653510 B2 | 14-01-2015 |
| | | JP WO2013175532 A1 | 12-01-2016 |
| | | KR 20150011744 A | 02-02-2015 |
| | | US 2013316867 A1 | 28-11-2013 |
| | | WO 2013175532 A1 | 28-11-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2906143 A
- EP 0444790 A2